# FASCICULE DE BREVET EUROPEEN

(11) **EP 1 675 768 B1**
(45) Date de publication et mention de la délivrance du brevet: **28.12.2011**
(21) Numéro de dépôt: 04817212.6
(22) Date de dépôt: 11.10.2004
(51) Int. Cl.: B63C 7/00, E02B 15/04, E21B 43/01

(54) **PROCEDE ET DISPOSITIF DE RECUPERATION DU PETROLE D'UN RESERVOIR DISPOSE SUR UN FOND MARIN, NOTAMMENT D'UNE EPAVE**
VERFAHREN UND VORRICHTUNG ZUR RÜCKGEWINNUNG VON ERDÖL AUS EINEM AUF EINEM MEERESBODEN ANGEORDNETEN TANK, INSBESONDERE EINEM WRACK
METHOD AND DEVICE FOR RECOVERING PETROLEUM FROM A TANK DISPOSED ON A SEA BED, PARTICULARLY A WRECK

(30) Priorité: 13.10.2003 FR 0311948
(43) Date de publication de la demande: 05.07.2006
(73) Titulaire: Technip France, 92400 Courbevoie (FR)
(72) Inventeur: BIAGGI, Jean-Pascal, F-78170 La Celle Saint Cloud (FR); THOMAS, Pierre-Armand, Tour Défense 2000, F-92800 Puteaux (FR); LUPPI, Ange, F-30000 Nîmes (FR)
(74) Mandataire: Bertrand, Didier
(86) Numéro de dépôt international: PCT/FR2004/002574
(87) Numéro de publication internationale: WO 2005/038145

(56) Documents cités:
- WO-A-00/58564
- WO-A-2004/087495
- FR-A- 2 391 906
- FR-A- 2 852 917
- US-A- 3 717 001
- US-A- 4 047 390
- US-A- 4 421 436

## Description

La présente invention concerne un dispositif et un procédé de récupération du pétrole d'un réservoir disposé sur un fond marin, notamment d'une épave.

On sait que le problème des pétroliers qui font naufrage et laissent échapper du pétrole de leurs cuves est un des problèmes de pollution écologique les plus graves du monde moderne.

Tant pour faire cesser la pollution que pour récupérer le pétrole restant dans les cuves en vue d'une exploitation éventuelle et permettre, le cas échéant, le renflouage du navire, on a proposé de longue date divers systèmes de récupération du pétrole enfermé dans les cuves du pétrolier.

Ainsi, la Demanderesse a déjà proposé dans le document FR 2391906 un élément en forme d'entonnoir, ouvert vers le bas, maintenu au-dessus de la zone d'échappement des produits, ledit élément en forme d'entonnoir étant suspendu à au moins une conduite tubulaire flexible dont une extrémité communique avec l'intérieur dudit élément et dont l'autre extrémité communique avec des moyens de stockage à la surface de l'eau, susceptibles de recevoir les produits remontés par la ou les conduites. Un lest est prévu sur l'entonnoir et/ou sur la conduite flexible. Des moyens accélérateurs de débit, tels que des pompes centrifuges, des systèmes d'injection d'air ou autres peuvent être prévus. Quoique le document indique que l'élément en forme d'entonnoir peut être rigide, il est préféré de prévoir une structure repliable susceptible d'être immergée à l'état replié et déployée après immersion à la profondeur d'utilisation requise. L'entonnoir se présente donc sous la forme d'une sorte de parapluie à armatures soutenant une enveloppe en matériau souple imperméable tel qu'une toile de polyester ou de néoprène, des flotteurs étant reliés aux armatures pour donner une certaine flottabilité à l'entonnoir.

Le document FR 2368581 fait également connaître un élément en forme d'entonnoir pyramidal en plastique souple qu'on vient faire glisser au-dessus de l'épave le long de câbles ancrés sur le sol marin. Le document WO 93/11305 qui se veut une amélioration du document précédent reste dans le même esprit. Le document WO94/17251 est une nouvelle variante de ces dispositifs, variante dans laquelle on prévoit un stockage intermédiaire du pétrole récupéré sous forme d'une courte conduite montante réalisée en matière souple et disposée au-dessus de l'entonnoir, ce stockage intermédiaire étant destiné à permettre de travailler par intervalle. Dans tous ces documents, il ne peut être envisagé que la récupérations de pétrole s'échappant de sources de pollution de faible étendue (petit bateau ou fuite localisée dans une conduite sous-marine) et à une faible profondeur comme le montre la mention souvent faite de plongeurs.

Le document US 4421436 fait connaître une plate-forme flottante coopérant avec un élément en forme de marquise ou d'entonnoir submersible, réalisé en coque à caissons ballastables. Cet élément peut être descendu en étant guidé le long de quatre câbles ancré sur le sol marin pour venir surmonter un puits dont s'échappe du pétrole, afin de le récupérer et de le conduire par une conduite flexible jusqu'à la plate-forme. Cette solution peut être satisfaisante pour des puits à des profondeurs relativement faibles mais la descente de la marquise submersible le long des câbles est une opération difficile qui exige que les câbles aient été disposés avec une grande précision et exactement parallèles ce qui est en pratique impossible à atteindre pour des grandes profondeurs. D'autre part, cette solution n'est visiblement envisagée que pour une marquise de relativement petites dimensions, suffisante pour couvrir une tête de puits mais insuffisante pour recouvrir l'épave d'un pétrolier. Or la difficulté du maniement et de la descente de la marquise le long des câbles serait encore accrue s'il s'agissait d'une marquise de grandes dimensions.

Comme on le voit donc, outre qu'ils concernent généralement des fuites bien localisées et à relativement faible profondeur, les documents précédents s'intéressent visiblement plus à des situations où le pétrole s'échappe librement et même souvent sous pression (cas des puits ou canalisations) et où donc sa récupération est relativement facile.

Or une situation très nouvelle est apparue avec un naufrage tel que celui du pétrolier Prestige. Comme on le sait, ce pétrolier est censé renfermer encore 20000 tonnes dans ses soutes qu'il convient de neutraliser ou de préférence récupérer. Mais le pétrolier repose à 3840 m de fond, ce qui, comme l'indiquent certains spécialistes, n'est plus du ressort des travaux pétroliers ordinaires mais de l'océanographie. Il est clair pour l'homme du métier qu'aucune des solutions envisagées dans les documents cités précédemment n'est applicable à ces profondeurs extrêmes. On a proposé de remorquer l'épave, mais son mauvais état rend la technique difficile et dangereuse. On a aussi proposé le dynamitage de l'épave pour précipiter la pollution mais l'opération est trop risquée. La solution considérée comme la plus réaliste consiste à recouvrir l'épave d'un sarcophage de béton, mais on ignore quelle sera la résistance d'un tel sarcophage dans le temps.

Le but de l'invention est de proposer une solution de récupération du pétrole prisonnier d'épaves gisant sur des fonds marins très profonds.

Ce but est atteint grâce à un dispositif de récupération conforme à la revendication annexée 1.

Le réservoir désigne n'importe quelle source d'hydrocarbure gisant sur le fond, et particulièrement une épave de pétrolier.

Par très grande surface, on entend une marquise rigide dont le toit est de vastes dimensions par opposition aux dispositifs de couverture très localisée de l'art antérieur. Le toit est avantageusement susceptible de couvrir complètement une épave de pétrolier. Il s'agit donc de surface de l'ordre de 1000 m² à 10000 m²: par exemple, dans le mode de réalisation envisagé pour la récupération du pétrole du Prestige, la surface de la marquise est d'environ 6000 m².

Au contraire des dispositifs connus qui prévoyait des marquises, d'ailleurs souples le plus souvent, simplement amarrées et guidées par des câbles, la marquise rigide de grande surface de l'invention repose par des pieds sur le fond marin et, compte tenu de la diversité des fonds marins aux

Le document WO 00/54654A, qui est considéré comme l'art antérieure le plus proche, fait connaître un dispositif de récupération de hydrocarbures avec toutes les caractéristiques du préambule de la revendication indépendante 1. Le document intermédiaire WO 2004/087495A montre en plus quelques caractéristiques additionnelles de la partie caractérisante de la revendication indépendante 1, à voir que la marquise est une marquise rigide réalisée au moins en partie en coque submersible à ballast, que la marquise est reliée à une installation de surface et que la marquise est munie de pieds à longueur réglable, destinés à venir prendre appui sur le fond marin.

grandes profondeurs envisagées et de la surface couverte, les pieds sont réglables en hauteur, de préférence individuellement ou par groupe, de manière à pouvoir ajuster leur longueur en fonction du relief et de l'inclinaison du fond marin et garder la marquise globalement horizontale.

Ces pieds à longueur réglable sont des pieds coulissants maintenus dans un manchon de serrage. Les pieds sont initialement maintenus en position haute par le manchon de serrage lorsque la marquise est amenée à sa position horizontale à l'aplomb de l'épave, puis les pieds sont ou bien « lâchés » par les manchons de serrage de manière à venir d'eux-mêmes trouver leur position sur le fond marin ou bien descendus grâce à un robot sous-marin. Ils comportent avantageusement des parties basses d'ancrage au sol, grâce auxquelles les pieds sont ancrés dans le sol, après quoi les pieds sont bloqués afin de stabiliser la marquise. Chaque pied peut être réalisé sous la forme d'un tube rigide et comporter en partie basse lesdites parties d'ancrage et en partie haute des parties d'accrochage.

Avantageusement selon l'invention, le toit de la marquise est réalisé au moins partiellement en coque submersible à compartiments de ballast au contraire de la seule marquise rigide de l'invention connue par le document US 4421436 dont la marquise était constitué de secteurs de tôles venant se disposer sur une ceinture réalisée en coque submersible à ballast. En effet, compte tenu des vastes dimensions de la marquise de l'invention et de son poids, il est intéressant de pouvoir assurer à la fois sa flottabilité et son équilibre pour le transport grâce au ballastage et au déballastage de ses compartiments.

Avantageusement, le toit est constitué essentiellement de deux surfaces en dièdre formant à leur faîte une gouttière à deux rampes conduisant à la partie supérieure. Cette structure simple permet notamment de réaliser assez facilement les compartiments de ballastage dans les deux grandes surfaces en dièdre.

Le toit de la marquise est avantageusement entouré d'une ceinture, elle-même réalisée de préférence en coque submersible à compartiments de ballast. La forme de la ceinture, et donc la forme globale du toit, est avantageusement rectangulaire, et un des petits côtés peut être conformé en étrave, c'est-à-dire former un dièdre, de manière à favoriser le transport (remorquage) de la marquise dans la mer lors de son installation.

Avantageusement, la marquise forme à sa partie supérieure une chambre collectrice, reliée à la conduite montante. Cette chambre collectrice comprend avantageusement des moyens pour faciliter la remontée du fluide vers l'installation de surface et notamment des moyens de fluidification des hydrocarbures récupérés. En effet, une des difficultés de la récupération du pétrole s'échappant d'une épave ayant sombré sur des fonds très profonds est que la température régnant dans ce milieu, par exemple de 2,5°C, rend les hydrocarbures très visqueux, ce qui freine leur ascension naturelle dans la conduite montante en direction de la plate-forme en surface. Il en est d'autant plus ainsi que la différence de densité entre l'hydrocarbure et l'eau de mer est faible (respectivement 1,012 contre 1,015) et de donne pas beaucoup de puissance au phénomène de flottaison naturelle de l'hydrocarbure. Il est donc intéressant de fluidifier ces hydrocarbures au niveau de la chambre collectrice par de moyens de chauffage et/ou des moyens de dilution des hydrocarbures.

Ces moyens de chauffage peuvent consister en des résistances électriques disposées dans la chambre collectrice. On peut aussi disposer des résistances électriques plus en amont du processus de récupération, par exemple sous le toit de la marquise pour commencér à fluidifier les hydrocarbures qui remontent le long de ce toit. L'énergie électrique nécessaire à ces résistances est amenée par des câbles électriques appropriés, et de préférence par des câbles passant au sein de la conduite montante. Les moyens de chauffage peuvent aussi comprendre des moyens de circulation d'eau chaude, par exemple sous forme de conduites toriques centrées sur l'axe de la chambre collectrice et constituant un corps de chauffe ou un serpentin ; l'eau utilisée est avantageusement de l'eau de mer chauffée (par exemple à 50°C) en surface et amenée par des canalisations adéquates, en particulier des canalisations auxiliaires de la conduite montante. Par ces moyens de chauffage, la température des hydrocarbures est avantageusement élevée de 2,5°C à une plage environ comprise entre 20 et 40°C. L'eau amenée par ces canalisations auxiliaires peut avantageusement être rejetée ensuite directement à la mer sous la marquise et à une température voisine de 20°C. Elle contribue ainsi, à créer un volume légèrement réchauffé sous la marquise.

Les moyens de dilution peuvent comprendre des moyens d'amenée d'un diluant tel que l'éthanol ou du diester par des canalisations auxiliaires, notamment intégrées dans la conduite montante. La dilution de l'hydrocarbure présente l'avantage non seulement d'augmenter sa fluidité mais aussi, de préférence, de diminuer sa densité pour permettre que par simple différence de densité avec l'eau de mer, il puisse remonter tout seul dans la conduite montante, sans qu'il soit nécessaire d'ajouter des moyens de pompage.

D'autre part, il est intéressant que la chambre collectrice comporte des moyens de brassage mécanique actionnés hydrauliquement ou électriquement, l'alimentation hydraulique ou électrique étant fournie par la conduite montante. Le brassage mécanique permet d'homogénéiser la température et la dilution du fluide récupéré. Les moyens de brassage peuvent d'ailleurs être combinés aux moyens d'amenée de diluant dans la chambre collectrice.

L'évacuation de la chambre collectrice vers la conduite montante peut être active (avec pompage actif) ou passive (sans pompage actif). Pour ce dernier cas, comme indiqué plus haut, la dilution permet d'obtenir une densité de fluide plus faible que celle de l'eau de mer (par exemple environ 10% plus faible) ; une simple dépression dans la conduite montante (par exemple, environ 4 MPa) permet une remontée naturelle du fluide récupéré vers la surface, par différence de densité.

Mais on peut naturellement aussi utiliser des moyens de pompage actif, prévus dans la cloche de pompage associée à la chambre collectrice, afin de favoriser la remontée du fluide dans la conduite montante. On peut aussi prévoir des moyens d'aspiration prévus en aval de la conduite et des moyens d'injection d'eau sous pression prévus en amont de la conduite.

La conduite montante est avantageusement une conduite flexible de type à faisceau de conduites intégré, du type connu sous le nom d'IPB (en anglais « Integrated Production Bundle »), permettant de remonter les hydrocarbures par la conduite centrale principale et permettant l'amenée sur site de fluides auxiliaires par les conduites et câbles disp osés à la périphérie de la conduite. On peut noter que les canalisations auxiliaires sont situées dans une couche d'isolation thermique. Ceci contribue à réduire considérablement le refroidissement du fluide circulant à l'intérieur de la conduite montante. On peut notamment véhiculer ainsi la puissance électrique nécessaire aux résistances électriques et/ou aux moyens de brassage et de pompage, l'eau chaude de réchauffement d'hydrocarbure, le diluant destiné à fluidifier et alléger l'hydrocarbure. La conduite peut être avantageusement réalisée sans voûte de pression de manière à alléger la structure, ce qui est utile compte tenu de la grande longueur de conduite suspendue, en raison de la grande profondeur à laquelle repose l'épave. Pour éviter son écrasement lors de la mise en place, la conduite est amenée sur site remplie d'eau.

La mise en place de l'installation de récupération conforme à l'invention s'effectue ainsi.

La marquise est construite en chantier naval, pieds maintenus en l'air dans leur manchon de serrage. Compte tenu de sa ceinture en coque à caisson, la marquise flotte dans la mer au niveau de cette ceinture. On connecte à la marquise flottante quatre bouées, qui peuvent être du type bouées espars (en anglais «cell spar buoys »), constituées d'un ensemble de tubes rigides montés autour d'un tube rigide central. On ballaste partiellement la marquise en remplissant ses caissons d'eau pour que la marquise s'enfonce dans l'eau ; lorsque la marquise est submergée dans l'eau, son poids apparent est repris par les bouées espars.

On dispose au-dessus de la marquise un bateau de déplacement auquel on amarre les quatre bouées espars.

On déballaste la marquise en injectant un fluide sensiblement incompressible léger, tel que l'éthanol ou le méthanol ou tout autre produit moins polluant tel que le diester de colza, sous le toit de la marquise. Ce fluide permet de diminuer le poids apparent de la marquise et de contrôler la descente de la marquise, et son incompressibilité permet d'éviter un écrasement de la marquise lorsqu'elle atteindra une grande profondeur. La marquise se trouve donc en flottaison partielle grâce au fluide léger et elle est emmenée par le bateau sur le site de l'épave. Là, un système de détection au moyen de capteurs préalablement installés sur l'épave et due transpondeurs disposés sur la marquise et/ou le bateau de déplacement permet mettre la marquise exactement à l'aplomb de l'épave, à une cinquantaine de mètres au-dessus de l'épave. La marquise est encore abaissée grâce aux treuils du bateau pour se rapprocher de l'épave, toujours en position verticale. Quand la marquise a atteint son niveau horizontal définitif, on commande les manchons de serrage des pieds pour que les pieds coulissent verticalement par gravité jusque sur le fond marin, chacun de la longueur nécessaire pour soutenir ensuite la marquise horizontalement, les manchons de serrage étant ensuite verrouillés dans la position prise par le pied. Le fluide de flottaison est alors récupéré par l'ouverture supérieure de la marquise au moyen de la conduite qui a permis sa mise en place et l'eau de mer envahit toute la surface inférieure du toit de la marquise ; celle-ci repose alors pas son poids complet sur le sol marin et est donc stable.

L'évacuation des hydrocarbures du réservoir vers le stockage intermédiaire sous la marquise peut s'effectuer de manière active ou passive. La manière passive consiste à laisser les hydrocarbures remonter naturellement par différence de densité. On peut accélérer le processus en créant de nouveaux orifices : par exemple au moyen d'un robot sous-marin (ROV), on vient ouvrir d'autres orifices d'échappement de l'hydrocarbure, notamment par perçage. On peut également utiliser des sondes chauffantes ou injecter des diluants pour accélérer le processus de remontée vers la marquise. On peut également injecter de l'eau sous pression à la base de l'épave.

On vient placer au moyen du robot sous-marin sur la chambre collectrice supérieure de la marquise un dispositif de connexion de la conduite montante permettant d'une part de connecter la chambre collectrice à la conduite montante et de raccorder toutes les autres connexions fluidiques et/ou électrique nécessaire. Ce dispositif de connexion peut différer selon la méthode employée de remontée des hydrocarbures. Lorsqu'on utilise la méthode passive (dilution + conduites d'eau chaude + dépression dans la conduite montante), le robot sous-marin vient effectuer les connexions entre les conduites d'eau de la conduite flexible intégrée et les diverses tubulures au sein de la chambre collectrice. Dans le cas où un pompage actif est utilisé, une cloche de pompage est descendue en pied de conduite montante, et le robot vient effectuer les connexions entre les circuits électriques de la cloche et ceux de la chambre collectrice.

L'installation est alors prête pour la récupération de l'hydrocarbure, de façon continue ou séquencée.

L'invention concerne aussi un procédé de récupération d'hydrocarbures contenus dans un réservoir disposé sur un fond marin, conforme a la revendication 16.

Le procédé conforme à l'invention comporte avantageusement en outre au moins l'une des caractéristiques suivantes :
- On réalise la marquise au moins partiellement en coque submersible à caissons à ballast.
- On amène la marquise sur le site du réservoir en flottaison partielle sous l'eau grâce à un déballastage partiel et des bouées.
- La marquise amenée sur le site de l'épave, sensiblement à l'aplomb du réservoir, est descendue sensiblement à la profondeur du réservoir en diminuant sa flottabilité grâce à une injection de fluide incompressible plus léger que l'eau de mer.
- On repère par des moyens de balises et de capteurs les positions respectives du réservoir et de la marquise.
- On procède à une fluidification de l'hydrocarbure récupéré au sein de la marquise, notamment au sein d'une chambre collectrice de la marquise.
- Cette fluidification comprend l'une au moins des actions consistant à chauffer, à diluer et/ou à brasser le fluide récupéré au sein de la marquise, notamment au sein d'une chambre collectrice de la marquise.

D'autres caractéristiques et avantages de l'invention ressortiront de la description suivante d'un exemple de réalisation. Il sera fait référence aux dessins annexés sur lesquels :
La figure 1 est une vue schématique montrant la marquise conforme à l'invention en position de récupération au-dessus d'une épave, reliée par une conduite montante à une plate-forme flottante de récupération.
La figure 2 est une vue en coupe transversale de la marquise en position de récupération de dessus de l'épave sur le fond marin incliné.

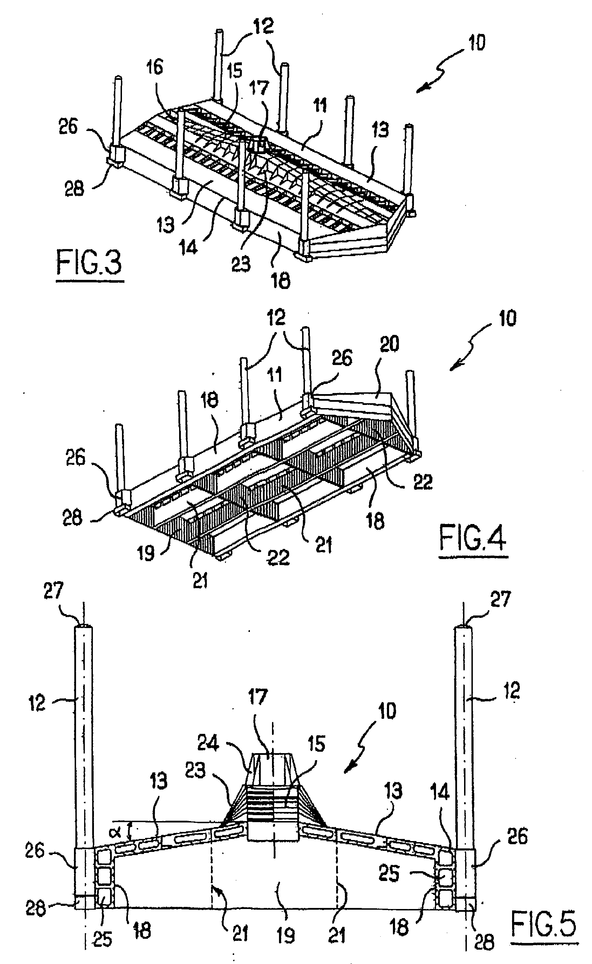

Les figures 3 et 4 sont des vues en perspectives respectivement de dessus et de dessous de la marquise conforme à l'invention, pieds relevés.
La figure 5 est une vue en coupe transversale de la marquise conforme à l'invention, pieds relevés.
La figure 6 est une vue en perspective montrant le détail d'un pied de la marquise.
La figure 7 est une vue latérale partielle montrant la chambre supérieure collectrice de la marquise et la cloche de la conduite montante associée.
La figure 8 est une vue en coupe montrant le détail intérieur de la chambre supérieure collectrice de la marquise.

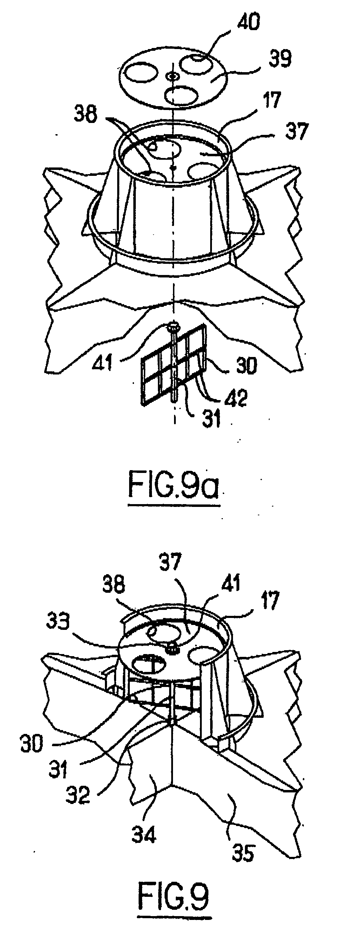

Les figures 9 et 9A sont des vues en perspective respectivement avec arrachement et en éclaté montrant le détail intérieur de la chambre supérieure collectrice de la marquise.
La figure 10 représente en perspective les couches constitutives d'une conduite montante intégrée, utilisable selon l'invention.
La figure 11 représente une phase de la mise en place de la marquise conforme à l'invention, flottant sur la mer.
La figure 12 représente une autre phase de la mise en place de la marquise conforme à l'invention, lorsque elle est partiellement déballastée et accrochée à des bouées espars.
Les figures 13 et 14 représentent en vue en élévation-et en vue arrière la marquise conforme à l'invention accrochée à un bateau de déplacement.
La figure 15 représente la phase de nouveau déballastage contrôlé de la marquise au moyen d'un liquide sensiblement incompressible plus léger que l'eau de mer.
La figure 16 illustre la descente d'un pied de support de la marquise lors de la pose finale de la marquise.
La figure 17 représente la phase finale de déballastage complet de la marquise.

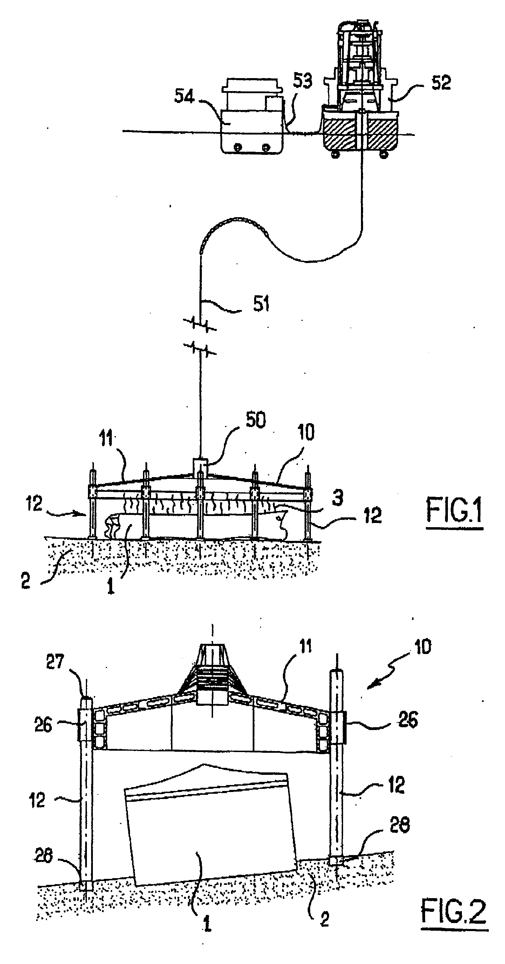

La figure 1 montre une épave 1 gisant sur un fond marin 2 qui peut être incliné comme on le voit sur la figure 2. Afin de récupérer les hydrocarbures 3 qui s'échappent de l'épave 1 et s'élèvent par différence de densité avec l'eau de mer, on a disposé au-dessus de toute l'épave 1 la marquise de récupération 10 conforme à l'invention. Cette marquise 10 récupère et conduit les hydrocarbures jusqu'à un raccord 50 en forme de cloche formant la partie inférieure d'une conduite montante 51 reliée à sa partie supérieure à une installation flottante 52 de récupération d'hydrocarbure. L'hydrocarbure récupéré peut être conduit par une conduite 53 à un stockage de surface 54.

La marquise 10 est essentiellement constituée d'un toit rigide 11 destiné à être globalement horizontal et de huit pieds 12 coulissant verticalement destinés à permettre justement que le toit puisse être installé horizontalement au-dessus de l'épave 1 en dépit de l'inclinaison ou des accidents du fond marin 2. Le toit 11 de la marquise 10 est de très grande taille pour pouvoir couvrir une épave, par exemple environ 120 m de longueur pour 50 m de largeur. Sa hauteur sans les pieds est d'environ 5 m et ses pieds 12 ont une longueur de 20 à 25 m. Le poids total de la marquise peut atteindre environ 3000 tonnes.

Le toit 11 est constitué de deux surfaces supérieures 13 en pente d'angle α (par exemple de 10°) de façon à former un faîte central plus haut que les bords longitudinaux horizontaux 14 des deux surfaces 13. Le faîte est occupé par une double rampe ou gouttière 15 s'élevant graduellement depuis ses extrémités longitudinales 16 jusqu'à son centre ou est formée une chambre de sortie circulaire ou chambre collectrice 17.

Le bord du toit 11 comporte une ceinture ou rebord périphérique vertical composé de deux côtés longitudinaux 18, d'un côté arrière transversal 19, et d'un côté avant formant un dièdre de proue 20.

Les côtés du rebord sont reliés par des entretoises longitudinales 21 et transversales 22 ou des cloisons. Des goussets 23 et 24 renforcent la gouttière centrale 15 et l'ouverture 17.

Les parois du toit 11, au niveau de leurs surfaces 13 formant dièdre sont constituées par une double coque en acier, selon la technologie des coques de navire. Des caissons formés entre les deux coques d'acier peuvent servir de volumes de ballast, notamment dans la partie centrale du toit.

Les côtés longitudinaux 18 sont formés également par une double coque en acier et ménagent des caissons 25 pouvant servir de volumes de ballast.

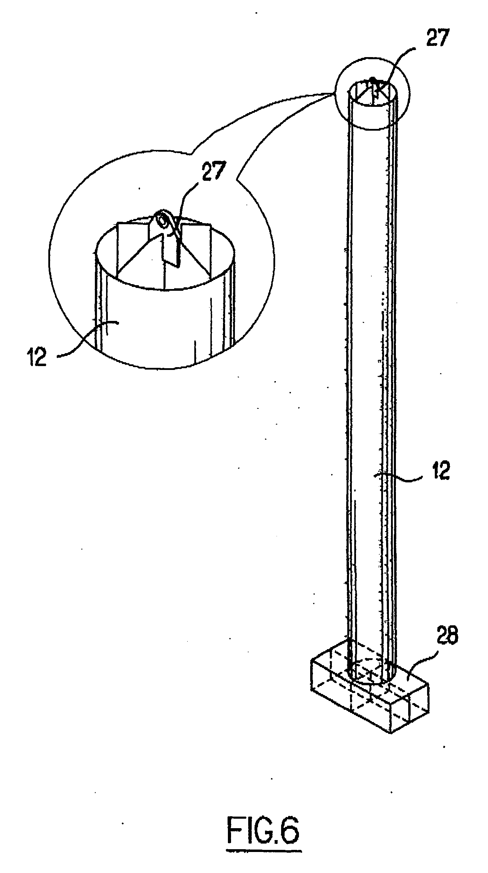

Les pieds 12 coulissent dans des manchons de serrage 26 permettant le blocage des pieds en position par des moyens de blocage non représentés. Toutefois, les moyens de blocage peuvent comprendre une crémaillère solidaire des pieds, adaptée à coopérer avec des moyens formant cliquet. Comme on le voit plus en détail sur la figure 6, les pieds 12 peuvent être tubulaires et comprendre à leur partie supérieure des éléments d'accrochage 27 destinés essentiellement à leur relevage en fin d'opération, et à leur partie inférieure des patins ou de préférence des jupes caissonnées 28 destinées à s'enfoncer en partie dans le fond marin 2.

La chambre collectrice supérieure 17 domine la gouttière centrale 15 du toit 11 et est destinée à recevoir comme on l'a indiqué ou bien directement un dispositif de connexion avec la conduite montante 51 ou bien la cloche de pompage 50 de la conduite montante 51 associée à la chambre collectrice 17.

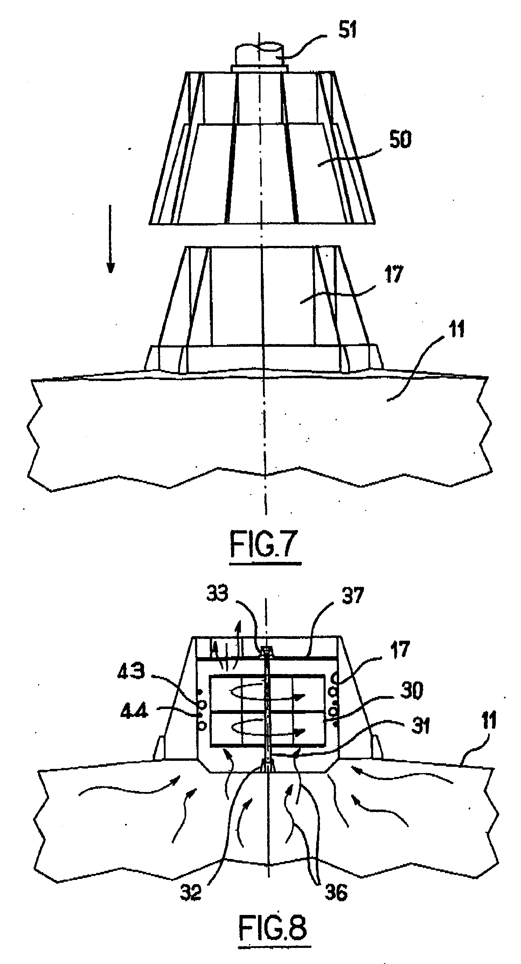

La chambre collectrice 17 est cylindrique et contient en tant que moyen de brassage un agitateur sous forme de pales 30 disposées sur un arbre vertical 31 dont les extrémités tourillonnent dans des paliers inférieur 32 et supérieur 33. Le palier inférieur 32 est porté par l'intersection d'entretoises 34, 35 appartenant par exemple à la structure du toit. Ces entretoises sont des plaques verticales et qui se croisent au milieu de l'ouverture inférieure de la chambre collectrice 17 et elles ne font pas obstacle au passage des fluides au travers de l'ouverture, comme représenté par les flèches 36 de la figure 8. Le palier supérieur 33 est centré dans une plaque de couvercle circulaire 37 de la chambre collectrice 17, disposé au voisinage de sa partie supérieure, et percé d'ouvertures 38 destinées au passage des fluides. Une seconde plaque circulaire 39, avec des ouvertures 40 disposées pour coïncider avec celles de la plaque de couvercle 37, est disposée sur la plaque de couvercle 37 et peut tourner par rapport à celle-ci de manière à former une vanne pour ouvrir ou fermer le passage au fluide selon que les trous 38 et 40 sont ou non en coïncidence. L'arbre 31 est creux et sa partie supérieure est aménagée pour servir d'entrée d'injection de fluide, notamment de diluant, cette entrée communiquant avec des conduits 42 dans les pales 30 ou formant les pales 30 de manière que du fluide injecté par l'entrée 41 de l'arbre 31 puisse être expulsé au niveau de sorties prévues sur ces conduits 42 et se trouver donc dans la chambre collectrice 17 pour s'y mélanger au fluide qui s'y trouve. La figure 8 montre aussi schématiquement les moyens de chauffage éventuels prévus dans la chambre collectrice, sous forme de conduites d'eau chaudes disposées en tores hélicoïdaux 43 et/ou de résistances électriques 44. Comme déjà évoqué, on peut aussi disposé des conduites d'eau chaude ou des résistances chauffantes (non représentées) sur la partie inférieure du toit de la marquise ; cela permet d'augmenter la température des hydrocarbures en contact avec le toit de la marquise de quelques degrés (par exemple 1 à 2 °C), ce qui favorise l'écoulement du fluide vers la chambre collectrice.

Ainsi qu'on l'a dit plus haut, lorsqu'on utilise la méthode passive de récupération des hydrocarbures (dilution + conduites d'eau chaude + dépression dans la conduite montante), les diverses tubulures et canalisations telles que 41, 43, 44 sont raccordées aux conduites appropriées de la conduite flexible intégrée 51. Dans le cas où un pompage actif est utilisé, les connexions se font par l'intermédiaire d'une cloche de pompage 50 comprenant des moyens de pompage non représentées.

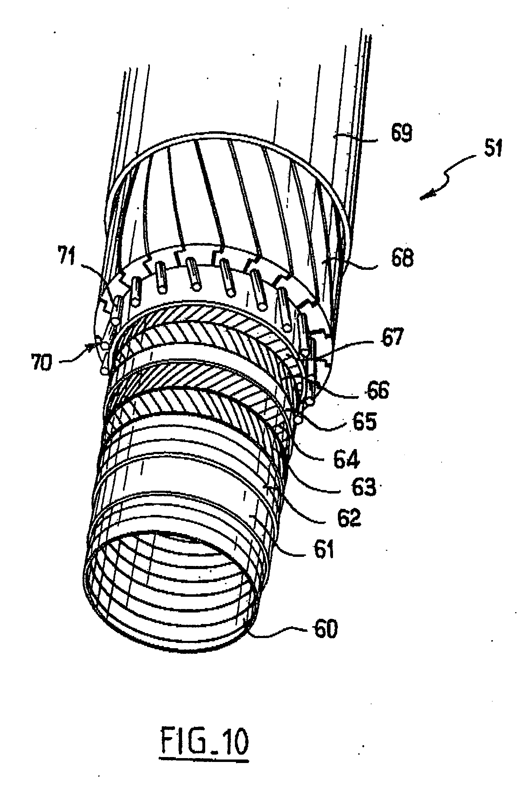

La conduite montante 51 est du type connu sous le nom de conduite IPB (« Integrated Production Bundle ») qui permet le passage de nombreux fluides et de l'alimentation électrique. La figure 10 montre que la conduite 51 est formée de couches obtenues par enroulement, à savoir de l'intérieur vers l'extérieur, une carcasse 60, une gaine polymérique de pression 61, une voûte de pression 62, des armures de traction en nappes croisées 63, 64 et 66, 67 séparée par une couche intermédiaire 65, une protection thermique annulaire 68 et une gaine polymérique externe 69. Dans la projection annulaire 68 sont disposés des câbles électriques 70 et des conduites de fluides auxiliaires 71, par exemple une douzaine de lignes d'injection d'eau. En fait, de manière préférée, la voûte de pression 62 est supprimée pour alléger la conduite et les armures de traction sont enroulées à un angle voisin de 55° pour assurer la stabilité de la structure, selon une technique connue en elle-même et développée antérieurement par la Demanderesse. De plus, les éléments constituant les armures de traction peuvent être réalisés en carbone pour assurer la résistance mécanique axiale.

La mise en place de l'installation de récupération conforme à l'invention s'effectue ainsi.

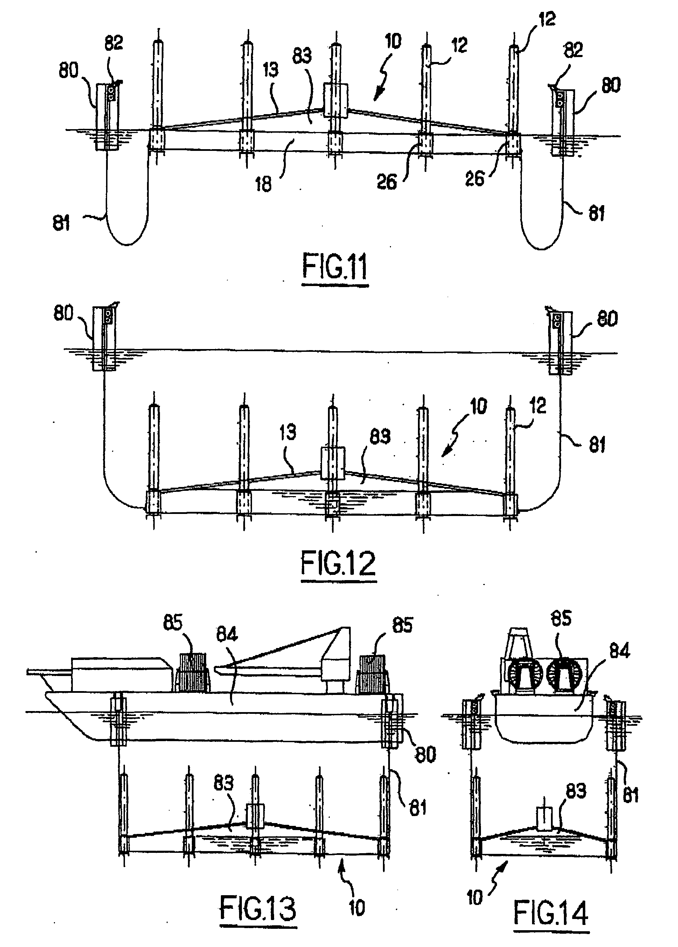

La marquise 10 est construite en chantier naval, pieds 12 maintenus en l'air dans leur manchon de serrage. Compte tenu de sa ceinture 18 en coque à caisson, la marquise 10 flotte dans la mer au niveau de cette ceinture 18, et de l'air est présent dans le volume 83 sous le toit 13 de la marquise 10. On connecte à la marquise flottante 10 quatre bouées 80 (qui peuvent être de type espar, c'est-à-dire «cell spar » en anglais) par des câbles 68 susceptibles de s'enrouler sur des cabestans 82 des bouées 80, comme représenté sur la figure 11. On ballaste partiellement la marquise 10 en chassant l'air partiellement l'air enfermé dans le volume sous toit 83, ce qui fait monter le niveau d'eau dans la ceinture et sous le toit 13 : la marquise 10 perd en flottabilité et s'enfonce dans l'eau, comme montré figure 12, et son poids apparent nettement moins lourd que son poids réel est repris par les bouées 80 au terme du processus d'enfoncement.

On vient amener à l'aplomb de la marquise partiellement enfoncée 10 un bateau de déplacement 84 équipé de treuils 85 auquel on connecte les câbles des quatre bouées espars 80 (figures 13 et 14).

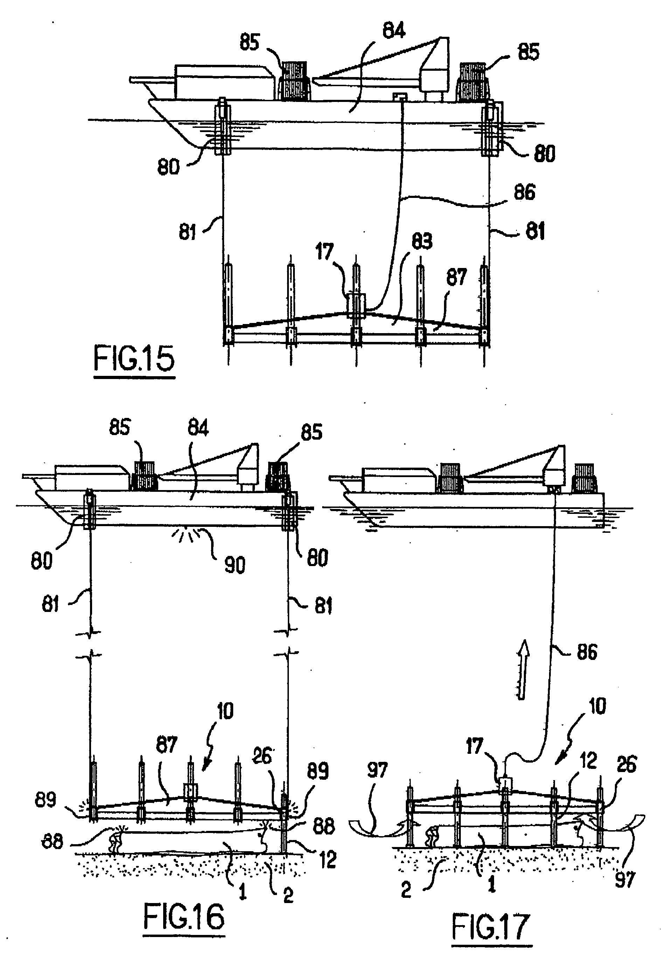

On vient amener au niveau de l'ouverture supérieure 50 de la marquise 10 une ligne d'injection 86 par laquelle on remplit l'espace sous toit 83 de fluide incompressible 87, avantageusement de l'éthanol ou du méthanol (voir figure 15). Celui-ci prend la place de l'air et, étant plus lourd que lui mais moins lourd que l'eau de mer, la marquise 10 s'enfonce donc plus profondément et de manière parfaitement contrôlée au fur et à mesure qu'on déroule les câbles 81 grâce aux treuils 85 du bateau 84. L'incompressibilité du fluide permet d'éviter l'écrasement de l'espace sous toit 83 lors de l'enfoncement sous les fortes pressions dues à la grande profondeur. La marquise 10 se trouve donc complètement suspendue à ses bouées espars 80 en flottaison partielle grâce à l'ethanol et elle est emmenée par le bateau 84 sur le site de l'épave 1, comme le montre la figure 16. Là, un système de détection au moyen d'émetteurs (balises 88), et de capteurs (transpondeurs 89 et transducteurs 90) préalablement installés sur l'épave 1 et sur la marquise 10 et/ou le bateau de déplacement 84 permet de mettre la marquise 10 exactement à l'aplomb de l'épave 1, à une cinquantaine de mètres au-dessus de l'épave 1. La marquise 10 est encore abaissée grâce aux treuils 85 pour se rapprocher de l'épave 1, toujours en position verticale. La position horizontale de la marquise 10 est assurée par les bouées 80 lors de son positionnement ; compte tenu de la marée et des courants auxquels sont soumises les bouées, il est possible que la marquise ne soit pas parfaitement horizontale ; une inclinaison de 5 ou 10° est acceptable. Quand la marquise 10 a atteint son niveau horizontal définitif, comme représenté sur la figure 16, on commande les manchons de serrage 26 des pieds 12 pour que les pieds 12 coulissent verticalement en tombant par gravité jusque sur le fond marin 2, chacun de la longueur nécessaire pour soutenir ensuite la marquise 10 horizontalement, les manchons de serrage 26 étant ensuite verrouillés dans la position prise par le pied 12. Le fluide de flottaison est alors récupéré par l'ouverture supérieure 17 de la marquise 10 au moyen de la conduite 86 qui a permis sa mise en place et l'eau de mer envahit toute la surface inférieure 83 du toit de la marquise 10, comme montré par les flèches 91 de la figure 17 ; celle-ci repose alors pas son poids complet sur le sol marin et est donc parfaitement stable.

L'évacuation des hydrocarbures du réservoir vers le stockage intermédaire sous la marquise 10 peut s'effectuer de manière active ou passive. Si l'on ne souhaite pas utiliser la manière passive qui consiste à laisser les hydrocarbures remonter naturellement par différence de densité, on peut accélérer le processus en créant de nouveaux orifices : par exemple au moyen d'un robot sous-marin, on vient ouvrir d'autres orifices d'échappement de l'hydrocarbure, notamment par perçage à chaud (« hot-tapping » en anglais). On peut également utiliser des sondes chauffantes ou injecter des diluants pour accélérer le processus de remontée vers la marquise 10. On peut également injecter de l'eau sous pression à la base de l'épave 1.

On vient ensuite placer au moyen du robot sous-marin sur la chambre supérieure 17 de la marquise 10 le dispositif de connexion ou cloche de pompage 50 de la conduite montante 51 dont le passage central est rempli d'eau de mer pour éviter son écrasement sous la pression des grandes profondeurs. L'installation est alors prête pour la récupération de l'hydrocarbure selon la figure 1.

Il est possible de prévoir autour de la marquise 10, accrochées à la ceinture de la marquise 10, des jupes classiques confinant un peu plus l'épave et l'espace sous la marquise, ces jupes étant relevables au moins partiellement pour laisser le passage éventuel aux robots utilisés pour le perçage ou pour d'autres actions sur l'épave ou la marquise.

## Revendications

1. Dispositif de récupération d'hydrocarbures contenus dans un réservoir disposé sur un fond marin, du type qui comprend un élément de récupération constitué d'une marquise (10) destinée à être installée à l'aplomb dudit réservoir, la marquise (10) étant conformée en entonnoir inversé pour favoriser l'évacuation des hydrocarbures vers sa partie supérieure (17), et destinée à être reliée à une conduite montante (51) pour l'évacuation des hydrocarbures entre cette partie supérieure et une installation marquise (10) présentant un toit (11) de très grande surface , **caractérisé en ce que** la marquise (10) est une marquise rigide réalisée au moins en partie en coque submersible à ballast, **en ce que** l'installation est une installation de surface, **en ce que** la marquise est munie de pieds (12) à longueur réglable destinés à venir prendre appui sur le fond marin (2) et **en ce que** les pieds (12) à longueur réglable sont des pieds coulissants maintenus dans un manchon de serrage (26).

2. Dispositif selon la revendication 1, **caractérisé en ce que** le toit (11) de la marquise (10) est réalisé au moins partiellement en coque submersible à ballast.

3. Dispositif selon l'une quelconque des revendications 1 ou 2, **caractérisé en ce que** le toit (11) est constitué essentiellement de deux surfaces (13) en dièdre formant à leur faîte une gouttière (15) à deux rampes conduisant à la partie supérieure (17).

4. Dispositif selon l'une quelconque des revendications 1 à 3, **caractérisé en ce que** le toit (11) de la marquise est entouré d'une ceinture (18, 19, 20).

5. Dispositif selon la revendication 4, **caractérisé en ce que** la ceinture 18, 19, 20) est au moins partiellement en coque submersible à ballast.

6. Dispositif selon l'une quelconque des revendications 4 ou 5, **caractérisé en ce que** la ceinture (18, 19, 20) est sensiblement rectangulaire et forme une étrave sur un petit côté (20).

7. Dispositif selon l'une quelconque des revendications 1 à 6, **caractérisé en ce que** la partie supérieure de la marquise forme une chambre collectrice (17).

8. Dispositif selon la revendication 7, **caractérisé en ce que** la chambre collectrice (17) comprend des moyens de fluidification des hydrocarbures récupérés.

9. Dispositif selon la revendication 8, **caractérisé en ce que** les moyens de fluidification comprennent des moyens de chauffage (43, 44).

10. Dispositif selon l'une quelconque des revendications 7 ou 8, **caractérisé en ce que** les moyens de fluidification comprennent des moyens de dilution (41).

11. Dispositif selon l'une quelconque des revendications 7 à 10, **caractérisé en ce que** la chambre collectrice (17) comprend des moyens de brassage (30).

12. Dispositif selon l'une quelconque des revendications 7 à 11, **caractérisé en ce que** la chambre collectrice (17) est associée à une cloche de pompage (50).

13. Dispositif selon l'une quelconque des revendications 1 à 12, **caractérisé en ce que** la conduite montante (51) est une conduite flexible de type à faisceau de conduites intégré.

14. Dispositif selon la revendication 13, **caractérisé en ce que** la conduite flexible (51) comprend des canalisations d'amenée d'eau chaude (71).

15. Dispositif selon l'une quelconque des revendications 1 à 14, **caractérisé en ce que** des jupes sont prévues autour de la marquise (10) pour confiner l'espace sous la marquise (10).

16. Procédé de récupération d'hydrocarbures contenus dans un réservoir disposé sur un fond marin, du type qui comprend l'installation d'un élément de récupération constitué d'une marquise (10) à l'aplomb dudit réservoir, l'évacuation des hydrocarbures vers la partie supérieure de la marquise 10 puis l'évacuation par conduite montante entre (51) cette partie supérieure et une installation la marquise (10) présentant un toit (11) de très grande surface , **caractérisé en ce que** la marquise (10) est une marquise rigide à coque submersible, **en ce que** l'installation est une installation de surface, **en ce que** la marquise (10) est munie de pieds (12) à longueur réglage destinés à venir prendre appui sur le fond marin et **en ce que** les pieds (12) à longueur réglable sont des pieds coulissants maintenus dans un manchon de serrage (26).

17. Procédé selon la revendication 16, **caractérisé en ce qu'**on réalise la marquise (10) au moins partiellement en coque submersible à caissons à ballast.

18. Procédé selon la revendication 17, **caractérisé en ce qu'**on amène la marquise (10) sur le site du réservoir (12) en flottaison partielle sous l'eau grâce à un déballastage partiel et des bouées espars (80).

19. Procédé selon l'une quelconque des revendications 17 ou 18, **caractérisé en ce que** la marquise (10) amenée sur le site du réservoir (1), sensiblement à l'aplomb du réservoir (1), est descendue sensiblement à la profondeur du réservoir en diminuant sa flottabilité grâce à une injection de fluide incompressible plus léger que l'eau.

20. Procédé selon l'une quelconque des revendications 17 à 19, **caractérisé en ce qu'**on repère par des moyens de balises (88) et de capteurs (89) les positions respectives du réservoir (1) et de la marquise (10).

21. Procédé selon l'une quelconque des revendications 16 à 20, **caractérisé en ce qu'**on procède à une fluidification de l'hydrocarbure récupéré au sein de la marquise (10).

22. Procédé selon la revendication 21, **caractérisé en ce que** la fluidification comprend l'une au moins des actions consistant à chauffer, à diluer et/ou à brasser le fluide récupéré au sein de la marquise.

23. Procédé selon l'une quelconque des revendications 16 à 20, **caractérisé en ce qu'**on procède à un pompage de l'hydrocarbure récupéré.

## Claims

1. Device for recovering hydrocarbons contained in a tank positioned on a seabed, of the type which comprises a recovery element consisting of an awning (10) intended to be installed vertically over the said tank, the awning (10) being shaped as an inverted funnel to encourage the discharge of the hydrocarbons towards its upper part (17), and being intended to be connected to a riser (51) for discharging the hydrocarbons between this upper part and an installation, the awning (10) having a roof (11) with a very large surface area, **characterized in that** the awning (10) is a rigid awning made at least in part of a ballasted submersible shell, **in that** the installation is a surface installation, **in that** the awning is equipped with adjustable-length legs (12) intended to rest on the seabed (2), and **in that** the adjustable-length legs (12) are sliding legs held in a clamping sleeve (26).

2. Device according to Claim 1, **characterized in that** the roof (11) of the awning (10) is made at least partially as a ballasted submersible shell.

3. Device according to either one of Claims 1 and 2, **characterized in that** the roof (11) is essentially made up of two surfaces (13) set at dihedral angle, at their ridge forming a gutter (15) with two inclines leading to the upper part (17).

4. Device according to any one of Claims 1 to 3, **characterized in that** the roof (11) of the awning is surrounded by a surround (18, 19, 20).

5. Device according to Claim 4, **characterized in that** the surround (18, 19, 20) is at least partially in the form of a ballasted submersible shell.

6. Device according to either one of Claims 4 and 5, **characterized in that** the surround (18, 19, 20) is substantially rectangular and forms a bow along one short side (20).

7. Device according any one of Claims 1 to 6, **characterized in that** the upper part of the awning forms a collecting chamber (17).

8. Device according to Claim 7, **characterized in that** the collecting chamber (17) comprises means of fluidizing the recovered hydrocarbons.

9. Device according to Claim 8, **characterized in that** the fluidizing means comprise heating means (43, 44).

10. Device according to either one of Claims 7 and 8, **characterized in that** the fluidizing means comprise dilution means (41).

11. Device according to any one of Claims 7 to 10, **characterized in that** the collecting chamber (17) comprises stirring means (30).

12. Device according to any one of Claims 7 to 11, **characterized in that** the collecting chamber (17) is associated with a pumping bell (50).

13. Device according to any one of Claims 1 to 12, **characterized in that** the riser (51) is a flexible pipe of the integrated flowline bundle type.

14. Device according to Claim 13, **characterized in that** the flexible pipe (51) comprises hot water supply lines (71).

15. Device according to any one of Claims 1 to 14, **characterized in that** skirts are provided around the awning (10) to contain the space under the awning (10).

16. Method of recovering hydrocarbons contained in a tank positioned on a seabed, of the type which involves installing a recovery element consisting of an awning (10) vertically over the said tank, discharging the hydrocarbons towards the upper part of the awning (10), then using a riser (51) to discharge between this upper part and an installation, the awning (10) having a roof (11) of very large surface area, **characterized in that** the awning (10) is a rigid awning with a submersible shell, **in that** the installation is a surface installation, **in that** the awning (10) is equipped with adjustable-length legs (12) intended to rest on the seabed, and **in that** the adjustable-length legs (12) are sliding legs held in a clamping sleeve (26).

17. Method according to Claim 16, **characterized in that** the awning (10) is at least partially produced in the form of a ballasted caisson submersible shell.

18. Method according to Claim 17, **characterized in that** the awning (10) is conveyed to the site of the tank (12) floating partially underwater by partially removing the ballast and using spar buoys (80).

19. Method according to either one of Claims 17 and 18, **characterized in that** the awning (10) conveyed to the site of the tank (1), substantially vertically over the tank (1), is lowered more or less to the depth of the tank by reducing its buoyancy by injecting a non-compressible fluid that is lighter than water.

20. Method according to any one of Claims 17 to 19, **characterized in that** marker buoys (88) and sensors (89) are used to identify the respective positions of the tank (1) and of the awning (10).

21. Method according to any one of Claims 16 to 20, **characterized in that** the hydrocarbon recovered within the awning (10) is then fluidized.

22. Method according to Claim 21, **characterized in that** the fluidizing involves at least one of the actions consisting in heating, diluting and/or stirring the fluid recovered within the awning.

23. Method according to any one of Claims 16 to 20, **characterized in that** the recovered hydrocarbon is then pumped.

## Patentansprüche

1. Vorrichtung zur Rückgewinnung von Kohlenwasserstoffen, die in einem auf einem Meeresboden angeordneten Tank enthalten sind, vom Typ enthaltend ein Rückgewinnungselement, das von einem Schutzdach (10) gebildet ist, das für die Installation senkrecht zu dem Tank vorgesehen ist, wobei das Schutzdach (10) als umgekehrter Trichter ausgebildet ist, um die Ableitung der Kohlenwasserstoffe in Richtung seines oberen Teils (17) zu begünstigen, und für die Verbindung mit einer Steigleitung (51) für die Ableitung der Kohlenwasserstoffe zwischen diesem oberen Teil und einer Einrichtung vorgesehen ist, wobei die Markise (10) ein Dach (11) mit einer sehr großen Fläche aufweist, **dadurch gekennzeichnet, dass** das Schutzdach (10) ein starres Schutzdach ist, das zumindest zum Teil als Schale, die mit Ballast versenkbar ist, realisiert ist, dass die Einrichtung eine Oberflächeneinrichtung ist, dass das Schutzdach mit Füßen (12) mit verstellbarer Länge versehen ist, die dafür vorgesehen ist, auf dem Meeresboden (2) zur Abstützung zu kommen, und dass die Füße (12) mit verstellbarer Länge Schiebefüße sind, die in einer Spannhülse (26) gehalten werden

2. Vorrichtung nach Anspruch 1, **dadurch gekennzeichnet, dass** das Dach (11) des Schutzdachs (10) zumindest zum Teil als Schale, die mit Ballast versenkbar ist, realisiert ist.

3. Vorrichtung nach einem der Ansprüche 1 oder 2, **dadurch gekennzeichnet, dass** das Dach (11) im Wesentlichen von zwei V-förmigen Flächen (13) gebildet ist, die an ihrem Scheitelpunkt eine Rinne (15) mit zwei Rampen bilden, die zu dem oberen Teil (17) führen.

4. Vorrichtung nach einem der Ansprüche 1 bis 3, **dadurch gekennzeichnet, dass** das Dach (11) des Schutzdachs von einem Gürtel (18, 19, 20) umgeben ist.

5. Vorrichtung nach Anspruch 4, **dadurch gekennzeichnet, dass** der Gürtel (18, 19, 20) zumindest zum Teil als Schale, die mit Ballast versenkbar ist, realisiert ist.

6. Vorrichtung nach einem der Ansprüche 4 oder 5, **dadurch gekennzeichnet, dass** der Gürtel (18, 19, 20) im Wesentlichen rechtwinklig ist und an einer kleinen Seite (20) einen Bug bildet.

7. Vorrichtung nach einem der Ansprüche 1 bis 6, **dadurch gekennzeichnet, dass** der obere Teil des Schutzdachs eine Sammelkammer (17) bildet.

8. Vorrichtung nach Anspruch 7, **dadurch gekennzeichnet, dass** die Sammelkammer (17) Mittel für die Verflüssigung der rückgewonnenen Kohlenwasserstoffe umfasst.

9. Vorrichtung nach Anspruch 8, **dadurch gekennzeichnet, dass** die Verflüssigungsmittel Aufheizmittel (43, 44) umfassen.

10. Vorrichtung nach einem der Ansprüche 7 oder 8, **dadurch gekennzeichnet, dass** die Verflüssigungsmittel Lösungsmittel (41) umfassen.

11. Vorrichtung nach einem der Ansprüche 7 bis 10, **dadurch gekennzeichnet, dass** die Sammelkammer (17) Rührmittel (30) umfasst.

12. Vorrichtung nach einem der Ansprüche 7 bis 11, **dadurch gekennzeichnet, dass** die Sammelkammer (17) einer Pumpglocke (50) zugeordnet ist.

13. Vorrichtung nach einem der Ansprüche 1 bis 12, **dadurch gekennzeichnet, dass** die Steigleitung (51) eine biegsame Rohrleitung vom Typ mit integriertem Leitungsstrang ist.

14. Vorrichtung nach Anspruch 13, **dadurch gekennzeichnet, dass** die biegsame Rohrleitung (51) Leitungen für die Zuführung von heißem Wasser (71) umfasst.

15. Vorrichtung nach einem der Ansprüche 1 bis 14, **dadurch gekennzeichnet, dass** Schürzen um das Schutzdach (10) herum vorgesehen sind, um den Raum unter dem Schutzdach (10) zu begrenzen.

16. Verfahren zur Rückgewinnung von Kohlenwasserstoffen, die in einem auf einem Meeresboden angeordneten Tank enthalten sind, vom Typ enthaltend die Montage eines Rückgewinnungselements, das von einem Schutzdach (10) gebildet ist, senkrecht zu dem Tank, die Ableitung der Kohlenwasserstoffe in Richtung des oberen Teils des Schutzdachs (10), anschließend die Ableitung durch Steigleitung (51) zwischen dem oberen Teil und einer Einrichtung, wobei die Markise (10) ein Dach (11) mit einer sehr großen Fläche aufweist, **dadurch gekennzeichnet, dass** das Schutzdach (10) ein starres Schutzdach mit Schale ist, die mit Ballast versenkbar ist, dass die Einrichtung eine Oberflächeneinrichtung ist, dass das Schutzdach (10) mit Füßen mit verstellbarer Länge versehen ist, die dafür vorgesehen ist, auf dem Meeresboden zur Abstützung zu kommen, und dass die Füße (12) mit verstellbarer Länge Schiebefüße sind, die in einer Spannhülse (26) gehalten werden

17. Verfahren nach Anspruch 16, **dadurch gekennzeichnet, dass** das Schutzdach (10) zumindest zum Teil als Schale, die mit Ballastkisten versenkbar ist, realisiert wird.

18. Verfahren nach Anspruch 17, **dadurch gekennzeichnet, dass** das Schutzdach (10) an den Tankstandort (12) durch teilweises Schwimmen unter Wasser dank einer teilweisen Entballastierung und Spierenbojen (80) gebracht wird.

19. Verfahren nach einem der Ansprüche 17 oder 18, **dadurch gekennzeichnet, dass** das Schutzdach (10), das an den Tankstandort (12) im Wesentlichen senkrecht zu dem Tank (1) gebracht wurde, im Wesentlichen auf die Höhe des Tanks abgesenkt wird, indem seine Schwimmfähigkeit dank einer Einspritzung eines inkompressiblen Fluids, das leichter als Wasser ist, verringert wird.

20. Verfahren nach einem der Ansprüche 17 bis 19, **dadurch gekennzeichnet, dass** durch Balisemittel (88) und Sensormittel (89) die jeweiligen Positionen des Tanks (1) und des Schutzdachs (10) ermittelt werden.

21. Verfahren nach einem der Ansprüche 16 bis 20, **dadurch gekennzeichnet, dass** eine Verflüssigung des rückgewonnenen Kohlenwasserstoffs im Innern des Schutzdachs (10) vorgenommen wird.

22. Verfahren nach Anspruch 21, **dadurch gekennzeichnet, dass** die Verflüssigung zumindest eine der Aktionen umfasst, die darin bestehen, das rückgewonnene Fluid im Innern des Schutzdachs (10) zu erhitzen, zu lösen und/oder zu rühren.

23. Verfahren nach einem der Ansprüche 16 bis 20, **dadurch gekennzeichnet, dass** ein Pumpen des rückgewonnenen Kohlenwasserstoffs vorgenommen wird.
